# EUROPEAN PATENT SPECIFICATION

(11) **EP 0 327 201 B1**
(45) Date of publication and mention of the grant of the patent: **29.12.1993**
(21) Application number: 89300104.0
(22) Date of filing: 06.01.1989
(51) Int. Cl.: G11B 20/10, G11B 20/12, G11B 5/008, G11B 27/28

(54) **Data recorders and methods of recording digital data**
Daten-Aufzeichnungsvorrichtung und Verfahren zur Aufzeichnung von digitalen Daten
Enregistreurs de données et méthodes pour enregistrer des données numériques

(30) Priority: 08.01.1988 GB 8800351
(43) Date of publication of application: 09.08.1989
(73) Proprietor: Hewlett-Packard Limited, Wokingham, Berkshire RG11 3LL (GB); SONY CORPORATION, Tokyo 141 (JP)
(72) Inventor: Inazawa, Yoshizumi c/o Patents Division, Sony Corp, Tokyo 141 (JP); Ozaki, Shinya c/o Patents Division, Sony Corp., Tokyo 141 (JP); Milthorp, Brian c/o Hewlett-Packard Limited, Berkshire RG11 3LL (GB); Thompson, Bruce c/o Hewlett-Packard Limited, Berkshire RG11 3LL (GB)
(74) Representative: Pilch, Adam John Michael

(56) References cited:
- EP-A- 0 140 696
- EP-A- 0 272 130
- COMPUTER TECHNOLOGY REVIEW. vol. 5, no. 4, 1985, LOS ANGELES US & M. Niquette: "The PC/T Tape Format Makes Data Backup Easier, More Reliable"
- IEEE TRANSACTIONS ON CONSUMER ELECTRONICS. vol. CE-33, no. 3, August 1987, NEW YORK US pages 275 - 284; T. Adachi et al.: "A Fast Random Accessing Scheme for R-DAT"
- IEEE TRANSACTIONS ON CONSUMER ELECTRONICS. vol. CE-32, no. 3, August 1986, NEW YORK US pages 433 - 440; K. Odaka et al.: "Format of Pre-recorded R-DAT Tape and Results of High Speed Duplication"
- Proceedings of the International Congress on Transportation Electronics vol. P-183, October 1986, Warrendale, PA, USA pages 321 - 331; M. Finer: "Sony Digital Audio Tape (DAT)"

## Description

This invention relates to data recorders and methods of recording digital data, and to apparatus for and methods of recording and/or reproducing digital signals.

Data stored on a hard disc or the like of a computer can be transferred to and recorded by a data streamer or data recorder once a day, so as to protect or back up the data. For this operation, analog audio tape recorders have been used in certain cases. However, analog tape recorders have disadvantages in that they need a considerable amount of magnetic tape for recording, and they operate at a relatively low data transferring rate upon recording, so that it takes a long time to transfer and record such data information. Moreover, analog tape recorders have further problems, for example the starting point of a desired portion of the recorded data information cannot be rapidly searched for.

Thus, to overcome the above-mentioned problems, it has been proposed to utilise a helical-scan type digital audio tape recorder (DAT) using a rotary head as a data recorder. Such data recorders utilising a DAT are described in European Patent Applications EP-A-0 272 130, EP-A-0 286 412, EP-A-0 297 809 and EP-A-0 300 732.

To utilise a DAT as a data recorder, data transferred from a host computer is transformed in accordance with a DAT format before recording. In the DAT format, one frame is made up of two oblique tracks formed by one rotation of two heads having different azimuth angles. 16-bit pulse code modulation (PCM) audio data, which has been interleaved, and auxiliary sub-data are recorded in this one frame area as a unit. During recording, there are formed in each track a main area for recording the PCM data and a sub-area for recording the sub-data.

The DAT has a high-speed search function, enabling data to be easily searched.

IEEE Transactions on Consumer Electronics, CE-32, No.3, pages 433-440, August 1986, New York USA, discloses a DAT recording format in which a program number and a time code are recorded in sub-code areas of the recording. Fast accessing to required parts of the recording is enabled but, if the time code is to be used for this purpose, the operator must know the actual time code of the required part.

European Patent Application Publication No. EP-A-0 272 130, which was published after the priority date of the present application (Article 54(3)), describes recording a file number and a save set number in the sub-code areas of a DAT format signal. The file number and save set number are recorded in a data pack which has the same format in each sub-code area of the recording.

In accordance with one aspect of this invention there is provided a data recorder for recording digital data on a recording medium wherein predeternmined amounts of the data are treated as separate frames and data having predetermined format is recorded on the recording medium for each frame, the data format being such that each frame is divided into first and second frame portions and the data is organised into main data and sub data for each frame portion, and wherein a first area for recording main data and a second area for recording sub data are formed in each frame portion, the data recorder comprising means for recording on the recording medium a first type of data segmentation unit each comprising a plurality of frames and a first count signal indicating the number of the first type of data segmentation units from a leading end of the recording medium, characterised in that the recording means is further operable to record a second count signal indicating the number of a second type of such data segmentation units from the leading end of the recording medium to a trailing end of the first type of data segmentation units, and the first and second count signals are recorded in the respective second areas of the first and second frame portions of each frame forming part of the first type of data segmentation units including the trailing end.

In accordance with another aspect of this invention there is provided a method of recording digital data on a recording medium wherein predetermined amounts of the data are treated as separate frames and data having a predetermined format is recorded on the recording medium for each frame, the data format being such that each frame is divided into first and second frame portions and the data is organised into main and sub data for each frame portion, and wherein a first area for recording main data and a second area for recording sub data are formed in each frame portion, the data recording method comprising the step of recording on the recording medium a plurality of a first type of data segmentation units each comprising a plurality of frames and a first count signal indicating the number of the first type of data segmentation units from a leading end of the recording medium, characterised in that a second count signal is recorded indicating the number of a second type of data segmentation units from the leading end of the recording medium to a trailing end of the first type of data segmentation units, and the first and second count signals are recorded in the respective second areas of the first and second frame portions of each frame forming part of the first type of data segmentation units including the trailing end.

In accordance with a further aspect of this invention there is provided a recording medium, such as a magnetic tape, on which are recorded signals as set out above.

A preferred embodiment of the present invention, to be described in greater detail hereinafter, provides a data recorder which can accept a plurality of types of data units each consisting of an independent amount of data.

In the preferred embodiment, it is possible to perform easily a high-speed search operation using a digital data recorder by selectively detecting the plurality of types of units in the data search mode.

The invention will now be described by way of example with reference to the accompanying drawings, throughout which like parts are referred to by like references, and in which:
Figure 1 is a block diagram showing an embodiment of the present invention;
Figure 2 is a schematic view showing a DAT format;
Figure 3 is a view showing the data format of a main data block;
Figure 4 is a view showing a format of a main area for one frame;
Figures 5A and 5B are depictions of the data formats of even and odd numbered sub-code blocks, respectively;
Figures 6 and 7 are views showing data formats of packs in the sub-code block;
Figure 8 is a view showing the relationship between groups and save sets; and
Figure 9 is a view showing the relationship between groups and other units.

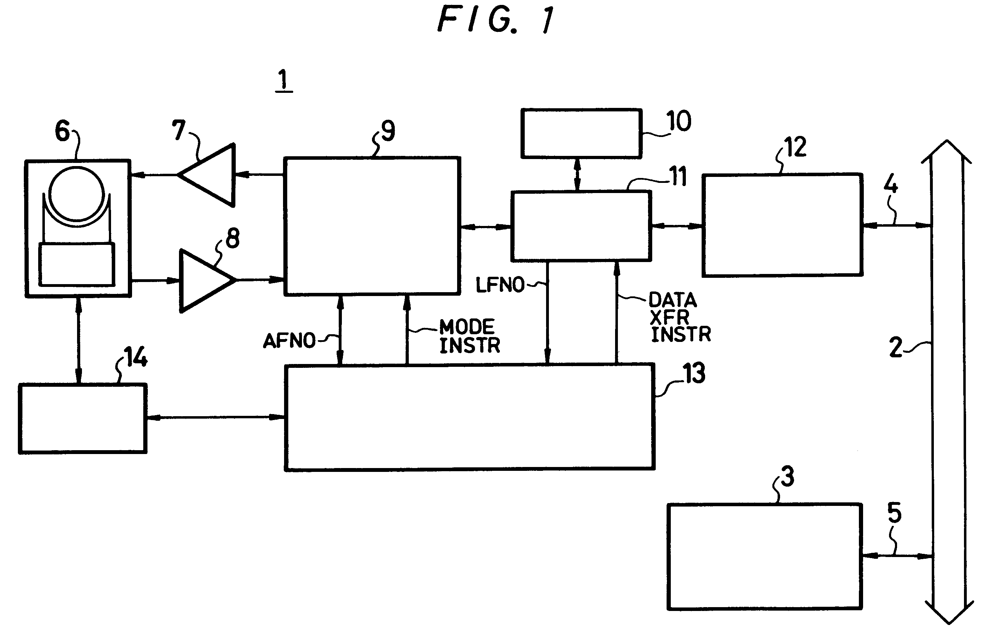

Figure 1 shows an arrangement in which a DAT 1 is used as a data recorder, the arrangement also including an interface bus 2, a host computer 3, and inner buses 4, 5. The DAT 1 includes a recording/reproducing section 6, a recording amplifier 7, a reproducing amplifier 8, a signal processing circuit 9, a random access memory (RAM) 10, a data controller 11, an interface board 12, a system controller 13 and a servo and motor drive circuit 14.

The system controller 13, the signal processing circuit 9 and the data controller 11 are arranged to exchange predetermined signals such as an absolute frame number AFNO, a mode instruction, a logical frame number LFNO, a data transfer instruction and the like.

Although this is not shown, the recording/reproducing section 6 is provided with a rotary head drum. A magnetic tape is wound around the drum over an angular range of about 90° and is fed by a capstan. The drum has two heads A and B having different azimuth angles. During one revolution of the drum, two oblique tracks are recorded on or reproduced from the tape.

Digital data supplied from the host computer 3 through the buses 5, 2 and 4 is input to the interface board 12, and is then subjected to predetermined signal processing in the data controller 11, the RAM 10, and the signal processing circuit 9 in accordance with instructions from the system controller 13. In this manner, conversion to the DAT format (described above) is performed. The converted signal is supplied to the recording/reproducing section 6 through the recording amplifier 7, and is recorded on the magnetic tape by the heads A and B.

The signal recorded on the magnetic tape can also be reproduced by the heads A and B. The reproduced signal is supplied to the signal processing circuit 9 through the reproducing amplifier 8. Digital data which is obtained by reconverting the reproduced signal in the signal processing circuit 9 is supplied to the host computer 3 through the data controller 11, the interface board 12 and the buses 4, 2 and 5.

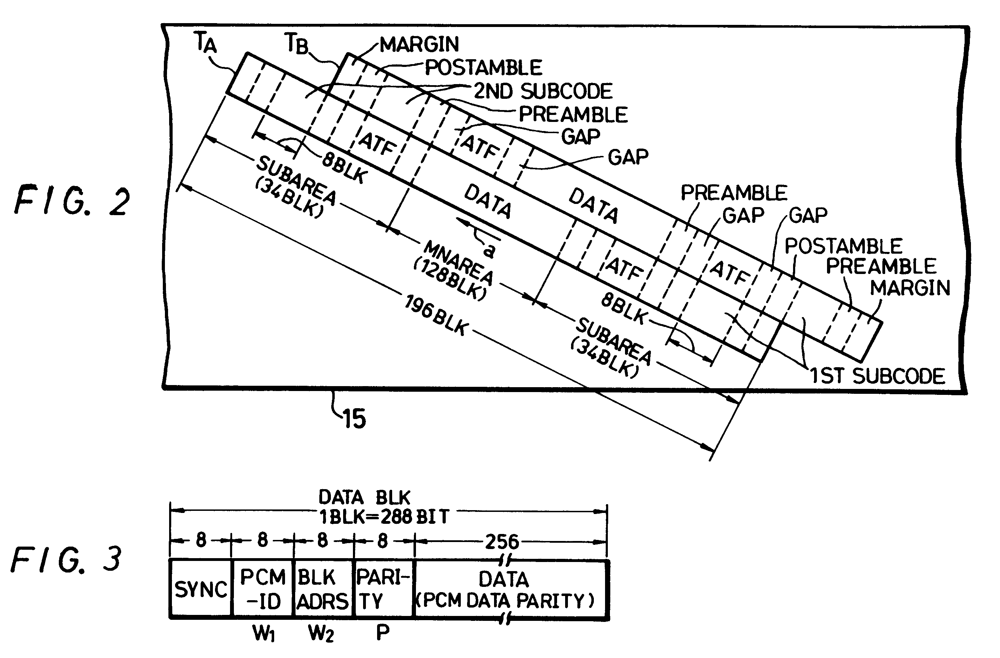

In the above apparatus, the DAT format which is used on the magnetic tape is as shown in Figure 2. During one revolution of the heads A and B, two oblique tracks TA and TB are formed on a tape 15 starting from its lower side, as indicated by an arrow a.

The two tracks TA and TB constitute one frame. Each of the tracks TA and TB consists of 196 blocks, and one block consists of 288 bits. 34 blocks at each end portion serve as a sub area, and 128 central blocks serve as a main area.

Each sub area is further divided into sections. More specifically, there are provided, from the lower end of the track, a margin section, a phase lock loop (PLL) preamble section of a sub code, a first sub-code section constituted of 8 blocks, a postamble section, a gap section for a block section, a tracking (ATF) signal section, a gap section between adjacent blocks, and a PLL preamble of data. Then, after the main data section there follows a gap section between adjacent blocks, an ATF signal section, a gap section between adjacent blocks, a PLL preamble section of a sub code, a second sub-code section constituted by 8 blocks, a postamble second sub-code section, and a margin section. The other blocks are constituted by respective predetermined numbers of blocks. It should be noted that in Figure 2, the measure of the lengths of the sections is not to scale.

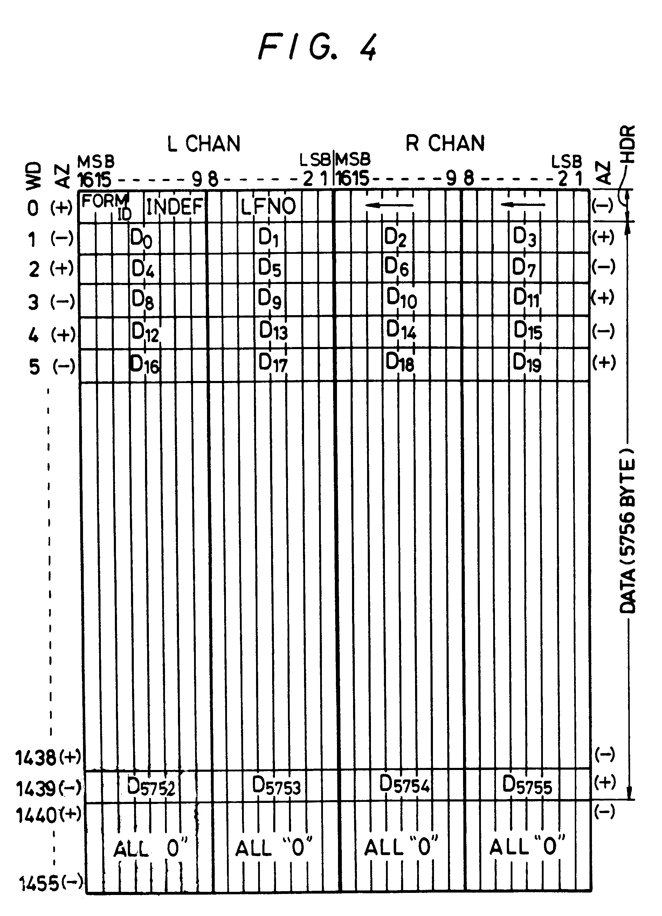

The main area consists of 128 data blocks. As shown in Figure 3, each block is constituted by an 8-bit synchronising (sync) signal, an 8-bit pulse code modulation identification (PCM-ID) signal W1, an 8-bit block address W2 and an 8-bit parity, and main data is stored in the following 256-bit section. The main data is 16-bit PCM data for left L and right R channels when an audio signal is processed. The 16-bit main data is interleaved in the main areas of the tracks TA and TB (one frame) together with the parity. In this case, in the main areas in one frame, about 5760 bytes of data are recorded. When the DAT is used as a data recorder, the data sent from the host computer 3 is converted into 16-bit data and is processed in the same manner as the PCM data. This data is formatted as shown in Figure 4 and is recorded in the main areas comprising one frame.

More specifically, in Figure 4, the above-mentioned 5760 bytes are divided into 1440 words (0 to 1439), each consisting of 4 bytes (32 bits). These words are divided into 16-bit (2-byte) L and R channels to correspond to the audio signal. In this format, a header portion is provided in the first word (4 bytes). Four bits near the most significant bit (MSB) of the first half byte in the L channel in this header portion serve as a format ID indicating a format of the data recorder, and the remaining 4 bits of this byte are indefinite. The remaining one byte in this L channel is used as a logical frame number (LFNO) area. Each 8-bit LFNO area provides a binary value indicating one of a series of numbers (1 to 23) of frames. The frames are organised in units or groups of 23 frames. In the R channel in the header portion, the same data as that in the L channel is provided.

A total of 5756 bytes of a data portion is provided in the following words "1" to "1439", and data signals from the host computer 3 are sequentially stored in respective words in units of 4 bytes each.

The logical frame number LFNO will now be described. Each LFNO area indicates one of the serial numbers 1 to 23 of the frames in each unit of 23 frames. That is, the frame numbers 1 to 23 repeatedly appear every group of 23 frames. Since a unit numbered by such LFNOs is used, a division for each predetermined amount of data can be easily detected, and signal processing can be facilitated.

The data formats in the first and second sub-code sections in the sub area will now be described. Each of the first and second sub-code sections consists of 8 sub-code blocks, and can record 2048 bits of data.

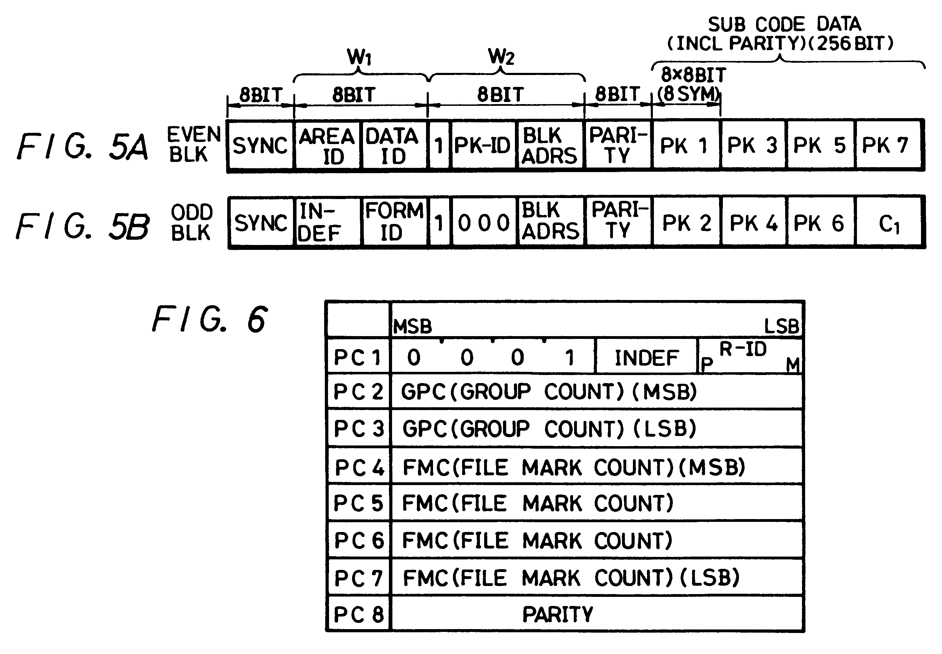

Figures 5A and 5B show, respectively, the constructions of the even-numbered sub-code blocks (EVEN blocks) and the odd-numbered sub-code blocks (ODD blocks), in each of which a synchronising signal, the areas W1 and W2 and a parity, respectively formed of eight bits, and 256 bits of sub-code data including a parity, are located in this order. The sub-code data is divided into four packs formed of 64 (8 x 8) bits (eight symbols), respectively.

As shown in Figures 5A and 5B, the contents of the areas W1 and W2 in the EVEN block are different from those in the ODD block, and the packs in the EVEN and ODD blocks are alternately numbered from "1" to "7", The eighth pack is assigned to record an error detecting code C1.

The area W1 of the EVEN block consists of a 4-bit area 1D and a 4-bit data 1D, and the area W2 thereof consists of an upper bit "1", a 3-bit pack 1D, and a 4-bit block address. The area W1 in the ODD block consists of a 4-bit indefinite portion, and a 4-bit format ID, and the area W2 thereof consists of an upper bit "1", a 3-bit all "0" code, and a 4-bit block address.

Each of the packs "1" to "7" is divided into 8 words in units of 8 bits. Each word includes, together with a parity, various codes such as a code indicating a read-in area of a recording start portion on a tape, a code indicating a read-out area of a recording end portion, a code indicating a recording date, an absolute frame number, a logical frame number and the like.

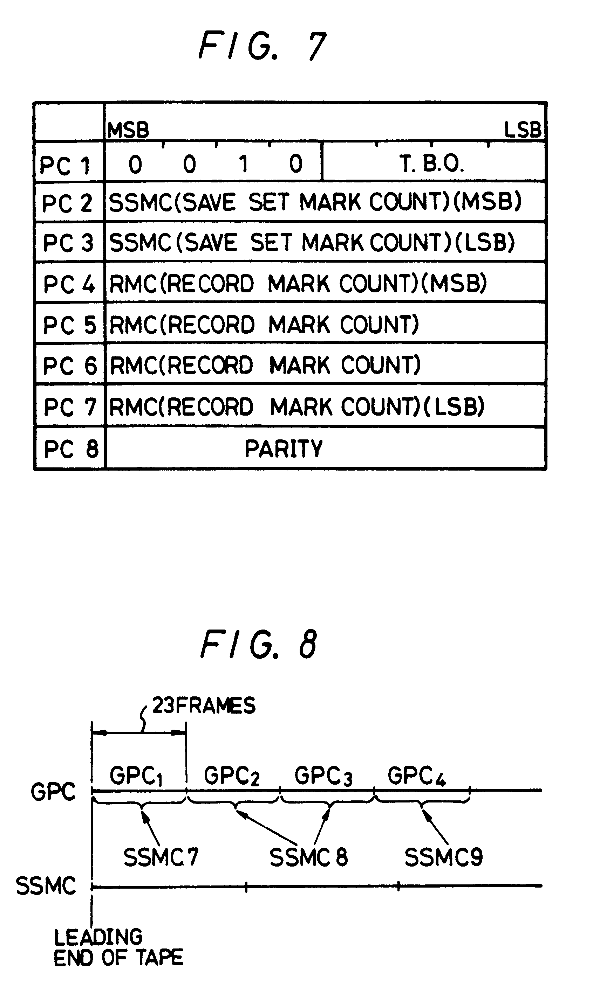

Figure 6 shows the format of the pack "1" of the seven packs, and Figure 7 shows the format of the pack "2".

Referring to Figure 6, the pack"1" consists of eight 8-bit words, PC1 to PC8. The upper four bits of the word PC1 are assigned to a pack number (in this case, "0001" indicating pack "1"), and the next 2 bits are indefinite. The following lower two bits (P,M) provide a repeat ID (R-ID) associated with multiple writing according to the present arrangement. The following words PC2 and PC3 (16 bits) are assigned to a group count. The group count is a value obtained by counting the number of groups of frames from the leading end of a tape. When data is multiply written, the identical group count value is provided to the multiply-written portion.

The following words PC4 to PC7 (32 bits) are assigned to a file mark count FMC. A file mark indicates a division of a predetermined amount of data sent from the host computer. The file mark count FMC is a value obtained by counting the number of file marks from the leading end of the tape to the end of the current group. The word PC 8 is assigned to a parity for the words PC1 to PC7.

In Figure 7, the pack "2" consists of 8 words PC1 to PC8. The upper 4 bits of the word PC1 are assigned to a pack number (in this case, "0010" indicating the pack "2"). The words PC2 and PC3 (16 bits) are assigned to a save set mark count SSMC. Data recorded by the data recorder during one back-up operation is called a save set, and a save set mark is sent from the host computer for each save set. The save set mark count SSMC indicates a value obtained by counting the number of save set marks from the leading end of the tape until counting of the count GPC is completed for each group of 23 frames. The following words PC4 to PC7 (32 bits) are assigned to a record mark count RMC. A record mark is a mark sent from the host computer for each division of the predetermined amount of data. The record mark count RMC indicates a value obtained by counting the number of record marks from the leading end of the tape until counting of the count GPC is completed for each group of 23 frames. The word PC8 is assigned to a parity for the words PC1 to PC7.

In this embodiment, as described above, the packs "1" and "2" provide four count values GPC, FMC, SSMC, and RMC respectively indicating divisions of data. In other words, these count values represent four types of units. These units are not particularly associated with data lengths (recording lengths on a tape), and have predetermined independent lengths. The counts FMC, SSMC, and RMC are represented in association with the count GPC.

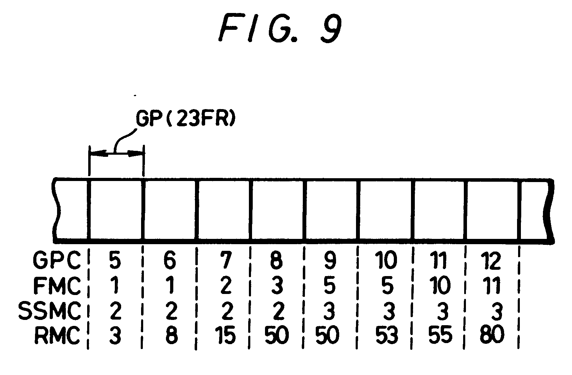

Figure 8 shows the relationship between the counts GPC and SSMC. The number of save set marks from the leading end of the tape until each time when a group of 23 frames is completed is recorded as the count SSMC in each of the 23 frames constituting the group including the timing. In the case of Figure 8, when the counting of the group GPC 1 is completed, since seven save set marks are counted, SSMC 7 is recorded in each of the 23 frames of the group of GPC 1. The same set of SSMC 8 extends over two groups of GPC 2 and GPC 3. Therefore, counts SSMC 8 are recorded in each of the 46 frames of these groups. The relationships between the other counts FMC and RMC and the count GPC are also determined in the same manner as in Figure 8. Figure 9 shows examples of the indications of the counts GPC, FMC, SSMC, and RMC for the respective groups.

Therefore, the above-mentioned counts GPC, FMC, SSMC, and RMC can be selectively detected, so that a high-speed search operation can be performed effectively.

According to the present technique, plural types of data units having independent recording lengths are set, and the numbers of the respective units are recorded. Therefore, when the numbers of these units are detected, a high-speed search operation effectively utilising the high-speed search function of the DAT can be realised.

## Claims

1. A data recorder for recording digital data on a recording medium (15) wherein predetermined amounts of the data are treated as separate frames and data having a predetermined format is recorded on the recording medium (15) for each frame, the data format being such that each frame is divided into first and second frame portions and the data is organised into main data and sub data for each frame portion, and wherein a first area for recording main data and a second area for recording sub data are formed in each frame portion, the data recorder comprising means (6) for recording on the recording medium (15) a first type of data segmentation unit each comprising a plurality of frames and a first count signal (FMC) indicating the number of the first type of data segmentation units from a leading end of the recording medium (15), characterised in that the recording means (6) is further operable to record a second count signal (SSMC) indicating the number of a second type of such data segmentation units from the leading end of the recording medium (15) to a trailing end of the first type of data segmentation units, and the first and second count signals (FMC, SSMC) are recorded in the respective second areas of the first and second frame portions of each frame forming part of the first type of data segmentation units including the trailing end.

2. A data recorder according to claim 1, wherein the first type of data segmentation units is included in the predetermined data format.

3. A data recorder according to claim 1 or claim 2, wherein the first count signal is a signal (FMC) indicating a count value of file marks sent by a host computer (3) together with the data to the data recorder.

4. A data recorder according to claim 1, claim 2 or claim 3, wherein the second count signal is a signal (SSMC) indicating a count value of set save marks sent by a host computer (3) together with the data to the data recorder to allow fast searching to a point on the recording medium (15) without having to know the number of the first type of data segmentation units that have been previously recorded from the leading end of the recording medium up to a particular point on the recording medium.

5. A data recorder according to claim 1, claim 2 or claim 3, wherein the second count signal is a signal (RMC) indicating a count value of the number of records recorded on the recording medium (15) since the beginning of recording.

6. A data recorder according to any one of the preceding claims, wherein a digital audio tape recorder (1) is used, the first area is a pulse code modulation area and the second area is a sub-code area.

7. A recording medium (15) on which are recorded predetermined amounts of digital data having a predetermined format and which are treated as separate frames, the data format being such that each frame is divided into first and second frame protions and the data is organised into main data and sub data for each frame portion, and wherein in a first area of each frame portion are recorded main data and in a second area are recorded sub data, and wherein further recorded on the recording medium (15) is a first type of data segmentation unit each comprising a plurality of frames and a first count signal (FMC) indicating the number of the first type of data segmentation units from a leading end of the recording medium (15), characterised in that a second count signal (SSMC) is recorded indicating the number of a second type of such data segmentation units from the leading end of the recording medium (15) to a trailing end of the first type of data segmentation units, and the first and second count signals (FMC, SSMC) are recorded in the respective second areas of the first and second frame portions of each frame forming part of the first type of data segmentation units including the trailing end.

8. A method of recording digital data on a recording medium (15) wherein predetermined amounts of the data are treated as separate frames and data having a predetermined format is recorded on the recording medium (15) for each frame, the data format being such that each frame is divided into first and second frame portions and the data is organised into main data and sub data for each frame portion, and wherein a first area for recording main data and a second area for recording sub data are formed in each frame portion, the data recording method comprising the step of recording on the recording medium (15) a a plurality of a first type of data segmentation units each comprising a plurality of frames and a first count signal (FMC) indicating the number of the first type of data segmentation units from a leading end of the recording medium (15), characterised in that a second count signal (SSMC) is recorded indicating the number of a second type of data segmentation units from the leading end of the recording medium (15) to a trailing end of the first type of data segmentation units, and the first and second count signals (FMC, SSMC) are recorded in the respective second areas of the first and second frame portions of each frame forming part of the first type of data segmentation units including the trailing end.

9. A method according to claim 8, wherein the first type of data segmentation units is included in the predetermined data format.

10. A method according to claim 8 or claim 9, wherein the first count signal is a signal (FMC) indicating a count value of file marks sent by a host computer (3) together with the data to be recorded.

11. A method according to claim 8, claim 9 or claim 10, wherein the second count signal is a signal (SSMC) indicating a count value of set save marks sent by a host computer (3) together with the data to be recorded to allow fast searching to a point on the recording medium (15) without having to know the number of the first type of data segmentation units that have been previously recorded from the leading end of the recording medium up to a particular point on the recording medium.

12. A method according to claim 8, claim 9 or claim 10, wherein the second count signal is a signal (RMC) indicating a count value of the number of records recorded on the recording medium (15) since the beginning of recording.

## Patentansprüche

1. Datenaufzeichnungsvorrichtung zur Aufzeichnung von digitalen Daten auf ein Aufzeichnungsmedium (15), bei der vorgegebene Mengen der Daten als getrennte Datenrahmen behandelt werden und Daten mit einem vorgegebenen Format für jeden Datenrahmen auf das Aufzeichnungsmedium (15) aufgezeichnet werden, wobei das Datenformat derart ausgebildet ist, daß jeder Datenrahmen in erste und zweite Datenrahmenteile aufgeteilt ist, und die Daten für jeden Datenrahmenteil in Haupt- und Unterdaten organisiert sind, und bei der ein erster Bereich zur Aufzeichnung der Hauptdaten und ein zweiter Bereich zur Aufzeichnung der Unterdaten in jedem Datenrahmenteil ausgebildet ist, wobei die Datenaufzeichnungsvorrichtung Mittel (6) zum Aufzeichnen eines ersten Typs einer Datensegmentierungseinheit auf das Aufzeichnungsmedium (15) umfassen, von denen jede eine Vielzahl von Datenrahmen und ein erstes Zähleranzeigesignal enthält, welches die Anzahl vom ersten Typ der Datensegmentierungseinheiten nach einem vorderen Ende des Aufzeichnungsmediums (15) anzeigt, dadurch gekennzeichnet, daß die Aufzeichnungsmittel (6) weiterhin in der Lage sind, ein zweites Zähleranzeigesignal (SSMC) aufzuzeichnen, welches die Anzahl eines zweiten Typs von derartigen Datensegmentierungseinheiten nach dem vorderen Ende des Aufzeichnungsmediums (15) bis zu einem hinteren Ende von Datensegmentierungseinheiten des ersten Typs anzeigt, und daß die ersten und zweiten Zähleranzeigesignale (FMC, SSMC) in den jeweiligen zweiten Bereichen der ersten und zweiten Datenrahmenteile jedes Datenrahmens aufgezeichnet werden, der einen Teil des ersten Typs von Datensegmentierungseinheiten bildet, welcher das hintere Ende enthält.

2. Datenaufzeichnungsvorrichtung nach Anspruch 1, bei der der erste Typ von Datensegmentierungseinheiten in dem vorgegebenen Datenformat enthalten ist.

3. Datenaufzeichnungsvorrichtung nach Anspruch 1 oder Anspruch 2, bei der das erste Zähleranzeigesignal ein Signal (FMC) ist, das einen Zähleranzeigewert von Dateimarkierungen anzeigt, welche von einem Host-Computer (3) zusammen mit den Daten zu der Datenaufzeichnungsvorrichtung gesendet werden.

4. Datenaufzeichnungsvorrichtung nach Anspruch 1, Anspruch 2 oder Anspruch3, bei der das zweite Zähleranzeigesignal ein Signal (SSMC) ist, das einen Zähleranzeigewert von eingestellten Sicherungsmarkierungen, die von einem Host-Computer (3) zusammen mit den Daten zu der Datenaufzeichnungsorrichtung gesendet werden, um ein schnelles Suchen eines Punktes auf dem Aufzeichnungsmedium (15) ohne Kenntnis der Anzahl der Datensegmentierungseinheiten vom ersten Typ zu ermöglichen, welche vorher nach dem vorderen Ende des Aufzeichnungsmediums bis zu einem speziellen Punkt auf dem Aufzeichnungsmedium aufgezeichnet worden sind.

5. Datenaufzeichnungsvorrichtung nach Anspruch 1, Anspruch 2 oder Anspruch 3, bei der das zweite Zähleranzeigesignal ein Signal (RMC) ist, welches einen Zähleranzeigewert der Anzahl von Aufzeichnungen anzeigt, die auf dem Aufzeichnungsmedium (15) seit dem Beginn der Aufzeichnung aufgezeichnet worden sind.

6. Datenaufzeichnungsvorrichtung nach einem der vorhergehenden Ansprüche, bei der ein digitaler Audiobandrecorder (1) verwendet wird, wobei der erste Bereich ein Pulscodemodulationsbereich und der zweite Bereich ein Untercodebereich ist.

7. Aufzeichnungsmedium (15), auf welches vorgegebene Mengen von digitalen Daten mit einem vorgegebenen Format aufgezeichnet werden, und welches als getrennte Datenrahmen behandelt wird, wobei das Datenformat derart ausgebildet ist, daß jeder Datenrahmen in erste und zweite Datenrahmenteile aufgeteilt ist, und die Daten für jeden Datenrahmenteil in Haupt- und Unterdaten organisiert sind, und bei dem in einem ersten Bereich von jedem Datenrahmenteil Hauptdaten aufgezeichnet werden und in einem zweiten Bereich Unterdaten aufgezeichnet werden, und bei dem weiterhin auf das Aufzeichnungsmedium (15) ein erster Typ von Datensegmentierungseinheiten aufgezeichnet ist, von denen jeder eine Vielzahl von Datenrahmen und ein erstes Zähleranzeigesignal (FMC) umfaßt, welches die Anzahl der Datensegmentierungseinheiten vom ersten Typ nach einem vorderen Ende des Aufzeichnungsmediums (15) anzeigt, dadurch gekennzeichnet, daß ein zweites Zähleranzeigesignal (SSMC) aufgezeichnet ist, welches die Anzahl eines zweiten Typs von derartigen Datensegmentierungseinheiten nach dem vorderen Ende des Aufzeichnungsmediums (15) bis zu einem hinteren Ende von Datensegmentierungseinheiten des ersten Typs anzeigt, und daß die ersten und zweiten Zähleranzeigesignale (FMC, SSMC) in den jeweiligen zweiten Bereichen der ersten und zweiten Datenrahmenteile von jedem Datenrahmen aufgezeichnet sind, welcher einen Teil von Datensegmentierungseinheiten des ersten Typs bildet, welcher das hintere Ende enthält.

8. Verfahren zur Aufzeichnung von digitalen Daten auf ein Aufzeichnungsmedium (15), bei dem vorgegebene Datenmengen als separate Datenrahmen behandelt werden und Daten mit einem vorge- gebenen Format für jeden Datenrahmen auf das Aufzeichnungsmedium (15) aufgezeichnet werden, wobei das Datenformat derart ausgebildet ist, daß jeder Datenrahmen in erste und zweite Datenrahmenteile aufgeteilt ist und die Daten für jeden Datenrahmenteil in Haupt- und Unterdaten organisiert sind, und bei dem in jedem Datenrahmenteil ein erster Bereich zur Aufzeichnung der Hauptdaten und ein zweiter Bereich zur Aufzeichnung der Unterdaten ausgebildet ist, wobei das Verfahren zur Datenaufzeichnung den Schritt der Aufzeichnung einer Vielzahl von Datensegmentierungseinheiten eines ersten Typs auf ein Aufzeichnungsmedium (15) umfaßt, von denen jede eine Vielzahl von Datenrahmen und ein erstes Zähleranzeigesignal (FMC) enthält, welches die Anzahl von Datensegmentierungseinheiten des ersten Typs nach einem vorderen Ende des Aufzeichnungsmediums (15) anzeigt, dadurch gekennzeichnet, daß ein zweites Zähleranzeigesignal (SSMC) aufgezeichnet wird, welches die Anzahl eines zweiten Typs von Datensegmentierungseinheiten nach dem vorderen Ende des Aufzeichnungsmediums (15) bis zu einem hinteren Ende der Datensegmentierungseinheiten des ersten Typs anzeigt, und bei dem die ersten und zweiten Zähleranzeigesignale (FCM, SSCM) in den jeweiligen zweiten Bereichen der ersten und zweiten Datenrahmenteile von jedem Datenrahmen aufgezeichnet werden, welcher einen Teil von Datensegmentierungseinheiten des ersten Typs bildet, welcher das hintere Ende enthält.

9. Verfahren nach Anspruch 8, bei dem der erste Typ von Datensegmentierungseinheiten in dem vorgegebenen Datenformat enthalten ist.

10. Verfahren nach Anspruch 8 oder Anspruch 9, bei dem das erste Zähleranzeigesignal ein Signal (FCM) ist, welches einen Zähleranzeigewert von Dateimarkierungen anzeigt, welche von einem Host-Computer (3) zusammen mit den Daten gesendet werden, die aufgezeichnet werden sollen.

11. Verfahren nach Anspruch 8, Anspruch 9 oder Anspruch 10, bei dem das zweite Zähleranzeigesignal ein Signal (SSMC) ist, welches einen Zähleranzeigewert von eingestellten Sicherungsmarkierungen anzeigt, welche durch einen Host-Computer (3) zusammen mit den Daten gesendet werden, welche aufgezeichnet werden sollen, um ein schnelles Suchen eines Punktes auf dem Aufzeichnungsmedium (15) ohne Kenntnis der Anzahl von Datensegmentierungseinheiten des ersten Typs zu ermöglichen, welche vorher nach dem vorderen Ende des Aufzeichnungsmediums bis zu einem speziellen Punkt auf dem Aufzeichnungsmedium aufgezeichnet worden sind.

12. Verfahren nach Anspruch 8, Anspruch 9 oder Anspruch 10, bei dem das zweite Signal ein Signal (RMC) ist, welches einen Zähleranzeigewert der Anzahl von Aufzeichnungen anzeigt, die auf dem Aufzeichnungsmedium (15) seit Beginn der Aufzeichnung aufgezeichnet worden sind.

## Revendications

1. Enregistreur de données pour enregistrer des données numériques sur un support d'enregistrement (15) dans lequel des quantités prédéterminées de données sont traitées en tant que séquences séparées et des données présentant un format prédéterminé sont enregistrées sur le support d'enregistrement (15) pour chaque séquence, le format des données étant tel que chaque séquence est divisée en première et seconde parties de séquence et que les données sont organisées en données principales et en sous-données pour chaque partie de séquence, et dans lequel une première zone pour enregistrer des données principales et une seconde zone pour enregistrer des sous-données sont formées dans chaque partie de séquence, l'enregistreur de données comprenant un moyen (6) pour enregistrer sur le support d'enregistrement (15) un premier type d'unités de segmentation de données dont chacune comprend une pluralité de séquences et un premier signal de comptage (FMC) qui indique le nombre du premier type d'unités de segmentation de données depuis une extrémité avant du support d'enregistrement (15), caractérisé en ce que le moyen d'enregistrement (6) peut en outre être activé pour enregistrer un second signal de comptage (SSMC) qui indique le nombre d'un second type de ces unités de segmentation de données depuis l'extrémité avant du support d'enregistrement (15) jusqu'à une extrémité arrière du premier type d'unités de segmentation de données, et les premier et second signaux de comptage (FMC, SSMC) sont enregistrés dans les secondes zones respectives des première et seconde parties de séquence de chaque séquence faisant partie du premier type d'unités de segmentation de données y compris l'extrémité arrière.

2. Enregistreur de données selon la revendication 1, dans lequel le premier type d'unités de segmentation de données est inclus dans le format de données prédéterminé.

3. Enregistreur de données selon la revendication 1 ou 2, dans lequel le premier signal de comptage est un signal (FMC) qui indique une valeur de comptage de repères de fichier émis par un ordinateur hôte (3) ensemble avec les données pour l'enregistreur de données.

4. Enregistreur de données selon la revendication 1, 2 ou 3, dans lequel le second signal de comptage est un signal (SSMC) qui indique une valeur de comptage de repères de sauvegarde de jeu émis par un ordinateur hôte (3) ensemble avec les données pour l'enregistreur de données afin de permettre une recherche rapide jusqu'à un point situé sur le support d'enregistrement (15) sans avoir à connaître le nombre d'unités de segmentation de données du premier type qui ont été précédemment enregistrées depuis l'extrémité avant du support d'enregistrement jusqu'à un point particulier du support d'enregistrement.

5. Enregistreur de données selon la revendication 1, 2 ou 3, dans lequel le second signal de comptage est un signal (RMC) qui indique une valeur de comptage du nombre d'enregistrements enregistrés sur le support d'enregistrement (15) depuis le début de l'enregistrement.

6. Enregistreur de données selon l'une quelconque des revendications précédentes, dans lequel un enregistreur à bande audio numérique (1) est utilisé, la première zone est une zone de modulation par impulsions et codage et la seconde zone est une zone de sous-code.

7. Support d'enregistrement (15) sur lequel sont enregistrées des quantités prédéterminées de données numériques présentant une format prédéterminé, lesquelles sont traitées en tant que séquences séparées, le format de données étant tel que chaque séquence est divisée en première et seconde parties de séquence et les données sont organisées en données principales et en sous-données pour chaque partie de séquence et dans lequel dans une première zone de chaque partie de séquence sont enregistrées des données principales et dans une seconde zone sont enregistrées des sous-données et dans lequel sont enregistrés en outre sur le support d'enregistrement (15) un premier type d'unités de segmentation de données dont chacune comprend une pluralité de séquences et un premier signal de comptage (FMC) qui indique le nombre du premier type d'unités de segmentation de données depuis une extrémité avant du support d'enregistrement (15), caractérisé en ce qu'un second signal de comptage (SSMC) est enregistré et il indique le nombre d'un second type de ces unités de segmentation de données depuis l'extrémité avant du support d'enregistrement (15) jusqu'à l'extrémité arrière du premier type d'unités de segmentation de données, et les premier et second signaux de comptage (FMC, SSMC) sont enregistrés dans les secondes zones respectives des première et seconde parties de séquence de chaque séquence qui fait partie du premier type d'unités de segmentation de données y compris.l'extrémité arrière.

8. Procédé d'enregistrement de données numériques sur un support d'enregistrement (15) dans lequel des quantités prédéterminées des données sont traitées en tant que séquences séparées et des données présentant un format prédéterminé sont enregistrées sur le support d'enregistrement (15) pour chaque séquence, le format de données étant tel que chaque séquence est divisée en première et seconde parties de séquence et les données sont organisées en données principales et en sous-données pour chaque partie de séquence et dans lequel une première zone pour enregistrer des données principales et une seconde zone pour enregistrer des sous-données sont formées dans chaque partie de séquence, le procédé d'enregistrement de données comprenant l'étape d'enregistrement sur le support d'enregistrement (15) d'une pluralité d'un premier type d'unités de segmentation de données dont chacune comprend une pluralité de séquences et d'un premier signal de comptage (FMC) qui indique le nombre du premier type d'unités de segmentation de données depuis l'extrémité avant du support d'enregistrement (15), caractérisé en ce qu'un second signal de comptage (SSMC) est enregistré et il indique le nombre d'un second type d'unités de segmentation de données depuis l'extrémité avant du support d'enregistrement (15) jusqu'à une extrémité arrière du premier type d'unités de segmentation de données et les premier et second signaux de comptage (FMC, SSMC) sont enregistrés dans les secondes zones respectives des première et seconde parties de séquence de chaque séquence qui fait partie du premier type d'unités de segmentation de données y compris l'extrémité arrière.

9. Procédé selon la revendication 8, dans lequel le premier type d'unités de segmentation de données est inclus dans le format de données prédéterminé.

10. Procédé selon la revendication 8 ou 9, dans lequel le premier signal de comptage est un signal (FMC) qui indique une valeur de comptage de repères de fichier émis par un ordinateur hôte (3) ensemble avec les données qui doivent être enregistrées.

11. Procédé selon la revendication 8, 9 ou 10, dans lequel le second signal de comptage est un signal (SSMC) qui indique une valeur de comptage de repères de sauvegarde de jeu émis par l'ordinateur hôte (3) ensemble avec les données qui doivent être enregistrées pour permettre une recherche rapide jusqu'à un point du support d'enregistrement (15) sans avoir à connaître le nombre du premier type d'unités de segmentation de données qui ont été précédemment enregistrées depuis l'extrémité avant du support d'enregistrement jusqu'à un point particulier du support d'enregistrement.

12. Procédé selon la revendication 8, 9 ou 10, dans lequel le second signal de comptage est un signal (RMC) qui indique une valeur de comptage du nombre d'enregistrements enregistrés sur le support d'enregistrement (15) depuis le début de l'enregistrement.
